# EUROPEAN PATENT APPLICATION

(11) **EP 1 121 856 A2**
(43) Date of publication of application: **08.08.2001**
(21) Application number: 00124479.7
(22) Date of filing: 09.11.2000
(51) Int. Cl.: A01L 7/02

(54) **Hoof pad**

(30) Priority: 03.02.2000 JP 2000026158
(71) Applicant: Asakawa, Nobumasa, Shizuoka-shi, Shizuoka-ken (JP)
(72) Inventor: Asakawa, Nobumasa, Shizuoka-shi, Shizuoka-ken (JP)
(74) Representative: Vetter, Ewald Otto

(57) **Abstract**

A hoof pad comprising a flexible plate (21) having a partially elliptical shape. The plate (21) has an outer edge (21a) substantially matching an inner edge (11a) of a horseshoe (11). The plate is provided on a top surface thereof with a plurality of catches (23). The catches extend outward from the plate. The plate is supported on the inside of the horseshoe by placing the catches on a top surface of the horseshoe so that the top surface of the plate has substantially the same height as the top surface of the horseshoe. Thereby the plate is made attachable to the horseshoe nailed to a hoof and detachable therefrom.

## Description

### BACKGROUND OF THE INVENTION

### (1) Field of the Invention

The present invention relates to a hoof pad. More particularly, the invention relates to a hoof pad which is attached to a horseshoe in order to protect the sole of a horse's hoof.

### (2) Description of the Prior Art

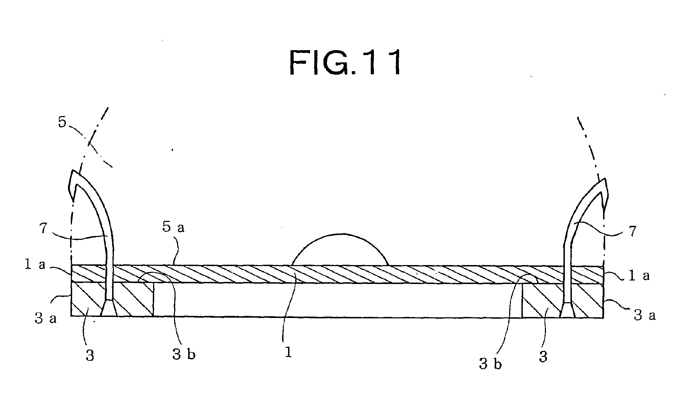

Fig. 11 shows a conventional hoof pad 1. The conventional hoof pad 1 is a plate having a partially elliptical shape. The hoof pad 1 has an outer edge 1a matching the outer edge 3a of a horseshoe 3. The conventional hoof pad 1 is interposed between the top surface 3b of the horseshoe 3 and the sole 5a of a hoof 5. The hoof pad 1 is fixed to the hoof 5 along with the horseshoe 3 by means of nails 7 that pass through both the horseshoe 3 and the hoof pad 1.

However, the conventional hoof pad has the following disadvantages:
(1) The hoof pad cannot be removed alone when the horseshoe is fixed to the hoof because the hoof pad is nailed to the hoof along with the horseshoe. In other words, the nails fixing the horseshoe and the hoof pad to the hoof have to be removed and the horseshoe has to be taken off along with the hoof pad when the hoof pad is to be removed. When the hoof pad is attached to the hoof, the hoof pad has to be nailed to the hoof along with the horseshoe. Therefore, not anyone can attach and detach the hoof pad. This has to be done by a farrier.
(2) Unless the hoof pad is taken off, it is impossible to apply hoof oil to the sole of the hoof and to remove foreign substances such as sand and sawdust caught between the hoof pad and the sole of the hoof.
(3) Since the sole of the hoof is kept in contact with the hoof pad and the hoof pad has a cushioning effect, the hoof is likely to become weak and always needs a hoof pad.
(4) Since the hoof pad always bears the weight of the horse and has a cushioning effect, the nails fixing the horseshoe and the hoof pad to the sole of the hoof are likely to become loose.
(5) Since the hoof pad is interposed between the sole of the hoof and the horseshoe and has a certain thickness, the hoof pad has to be attached to both of a right and left pair of hooves at the same time in order that the soles of the hooves have the same height from the ground. Even when only one of the right and left pair of hooves needs the hoof pad, the hoof pad has to be attached to both of the right and left pair of hooves.

### SUMMARY OF THE INVENTION

It is therefore an object of the invention to provide a hoof pad which has obviated all of the above-mentioned disadvantages of the conventional hoof pad.

It is a further object of the invention of provide a hoof pad which can be easily attached and detached while the horseshoe is fixed to the hoof by means of nails.

These and other objects have been attained by a hoof pad comprising a flexible plate having a partially elliptical shape, said plate having an outer edge substantially matching an inner edge of a horseshoe, said plate being provided on a top surface thereof with a plurality of catches, said catches extending outward from said plate, said plate being supported on the inside of the horseshoe by placing said catches on a top surface of the horseshoe so that the top surface of said plate has substantially the same height as the top surface of the horseshoe, thereby said plate being attachable to the horseshoe nailed to a hoof and detachable therefrom.

With respect to the above-mentioned hoof pad, the horseshoe itself is fixed to the sole of the hoof by means of nails in the same way as the prior art. The hoof pad is attachable to the horseshoe nailed to the hoof and detachable therefrom. When the hoof pad is attached to the horseshoe which is nailed to the hoof, the horse's leg is kept above the ground, the plate of the hoof pad being positioned on the inside of the horseshoe from under the horseshoe, then the catches of the plate being placed on the top surface of the horseshoe. When the hoof pad is detached from the horseshoe which is nailed to the hoof, the horse's leg is kept above the ground and the plate of the hoof pad which is on the inside of the horseshoe is pulled away from the horseshoe. Since the plate of the hoof pad is flexible, the plate can be easily attached to and detached from the horseshoe which is nailed to the hoof.

Notches may be formed in the top surface of the horseshoe in the sections corresponding to said catches so as to receive said catches. It is very easy to place the catches on the notches and remove the catches from the notches.

Also, the invention provides a hoof pad comprising a flexible plate having a partially elliptical shape, a step being formed continuously on a top surface of a horseshoe along an inner edge of the horseshoe, said plate having an outer edge substantially matching said step, said plate being supported on the inside of the horseshoe by placing the outer edge of said plate on said step of the horseshoe so that a top surface of said plate has substantially the same height as the top surface of the horseshoe, thereby said plate being attachable to the horseshoe nailed to a hoof and detachable therefrom.

The hoof pad of the present invention has the following functions:
1. prevents the sole of the hoof from being pressed by sawdust or horse dung;
2. prevents the hoof from drying out;
3. protects the hoof hygienically from horse dung;
4. prevents the sole of the hoof from being inflamed by stones;
5. protects the sole of the hoof when the sole is excessively shaved;
6. protects the sole of the hoof during outdoor horse riding;
7. holds medication in place on the sole of the hoof in case of a hoof disease;
8. prevents snow from becoming packed in the sole of the hoof.

### BRIEF DESCRIPTION OF THE DRAWINGS

Fig. 1 is a perspective view of a hoof pad attached to a hoof.

Fig. 2 is a perspective view of the hoof pad and a horseshoe.

Fig. 3 is a sectional view showing the hoof pad attached to the hoof.

Fig. 4 is a plan view of the hoof pad attached to the horseshoe.

Fig. 5 is a plan view of another horseshoe.

Fig. 6 is a sectional view showing another example of the hoof pad attached to the hoof.

Fig. 7 is a plan view of a further example of the hoof pad.

Fig. 8 is a sectional view taken along the line VIII-VIII of Fig. 7.

Fig. 9 is a sectional view showing a further example of the hoof pad attached to the hoof.

Fig. 10 is a plan view showing said hoof pad of Fig. 9 attached to the horseshoe.

Fig. 11 is a sectional view showing a conventional hoof pad attached to the hoof.

### DETAILED DESCRIPTION OF THE INVENTION

The present invention will now be described in detail with reference to the attached drawings.

Reference symbol 11 represents a horseshoe. The horseshoe 11 is the same as conventional horseshoes in having a plurality of nail holes 13 which pass through the horseshoe 11 from top to bottom. The horseshoe 11 is fastened to the sole 17a of a hoof 17 as follows: When the horseshoe 11 is kept in contact with the sole 17a of the hoof 17, nails 15 are passed through the nail holes 13 in the horseshoe 11 from the bottom and hammered into the hoof 17.

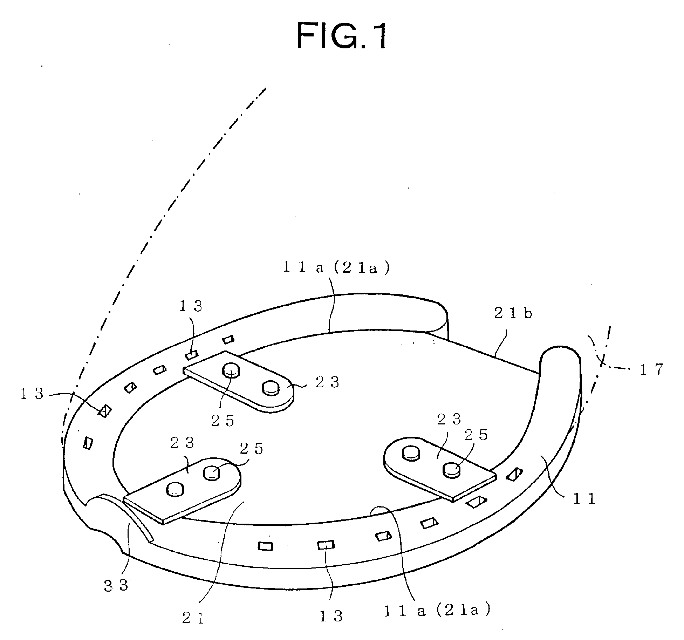

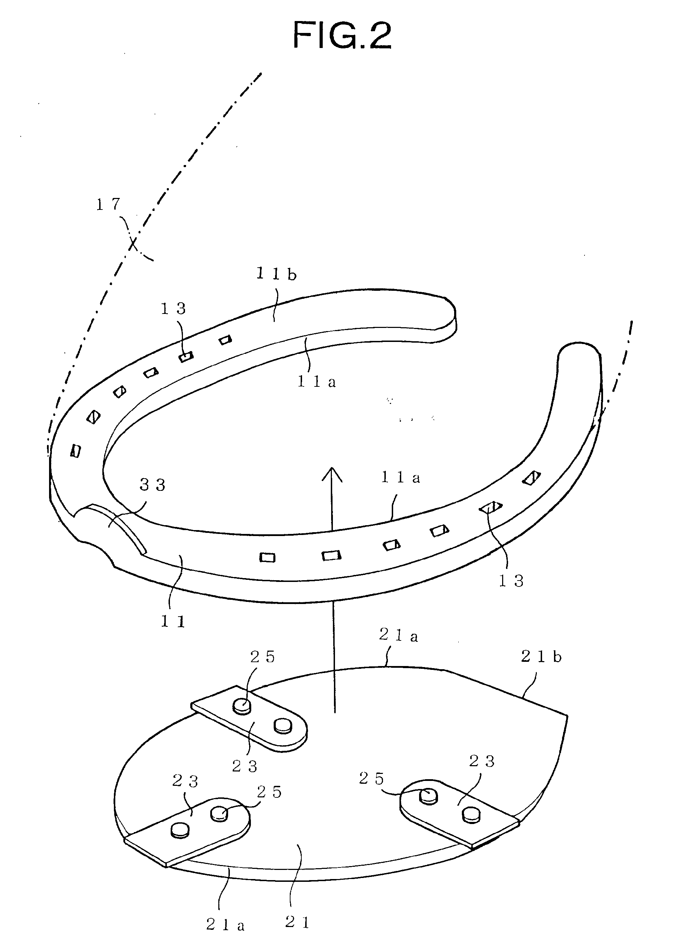

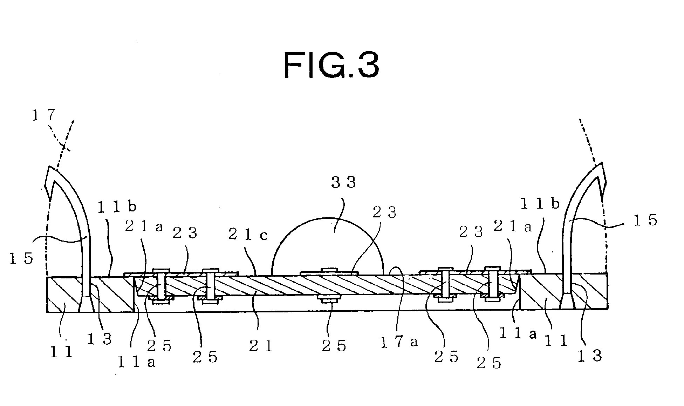

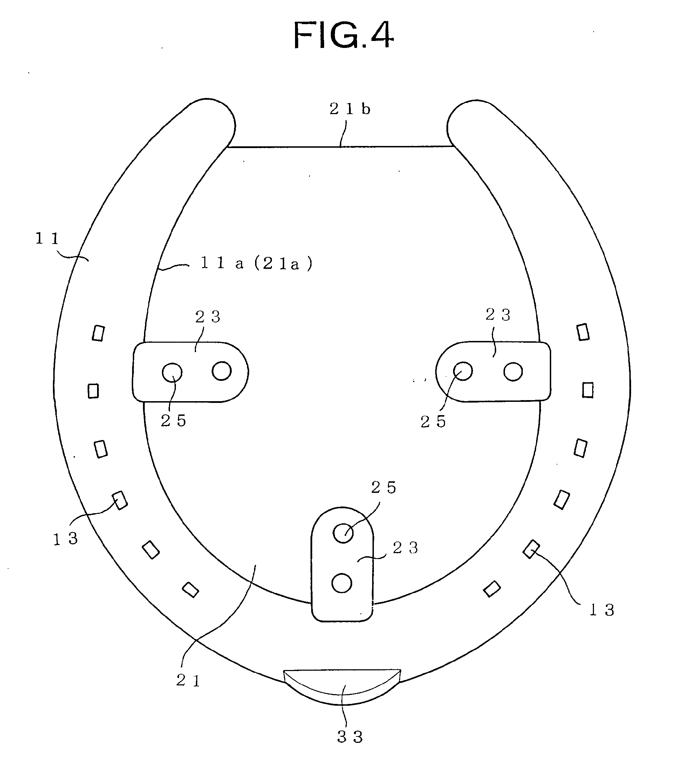

Referring to Figs. 1 to 4, a hoof pad according to the present invention comprises a flexible plate 21 having a partially elliptical shape with its rear portion 21b cut off. The plate 21 has an outer edge 21a substantially matching an inner edge 11a of the horseshoe 11. The plate 21 is made, for example, of a synthetic resin such as a urethane resin.

The plate 21 is provided on a top surface 21c thereof with a plurality of catches 23. The catches 23 extend outward from the plate 21. The number and positions of these catches 23 are optional. The catches 23 are fixed to the plate 21 by fixing means 25 such as pins. The plate 21 is supported on the inside of the horseshoe 11 by placing the catches 23 on a top surface 11b of the horseshoe 11 so that the top surface 21c of the plate 21 has substantially the same height as the top surface 11b of the horseshoe 11. Thereby the plate 21 is made attachable to the horseshoe 11 nailed to the hoof 17 and detachable therefrom.

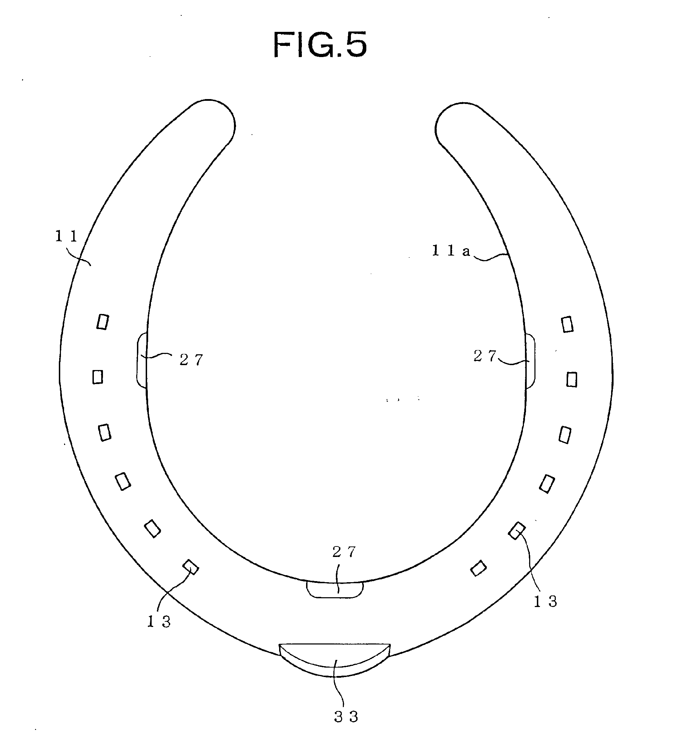

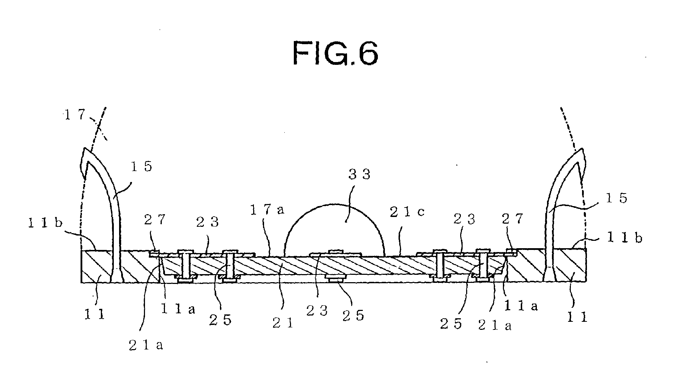

In Figs. 5 and 6, notches 27 are formed in the top surface 11b of the horseshoe 11 in the sections corresponding to the catches 23 so as to receive the catches 23. Each of the notches 27 is a shallow groove having a shape corresponding to the shape of each catch 23.

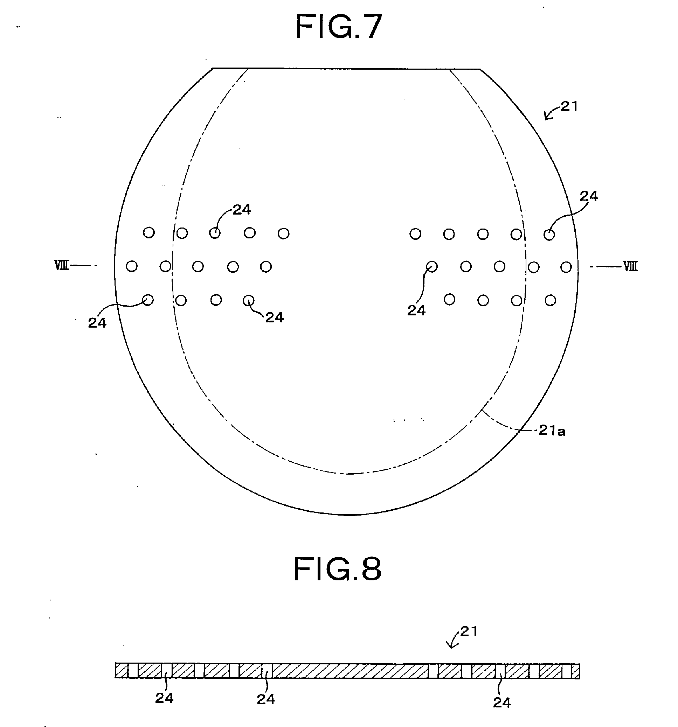

In Figs. 7 and 8, the plate 21 has a plurality of holes 24 which pass through the plate 21 from top to bottom. The fixing means 25 such as pins for fixing the catches 23 to the plate 21 are passed through suitable holes 24 selected according to the size and shape of the horseshoe 11. The plate 21 is cut small so as to have an outer edge 21a substantially matching the inner edge 11a of the horseshoe 11.

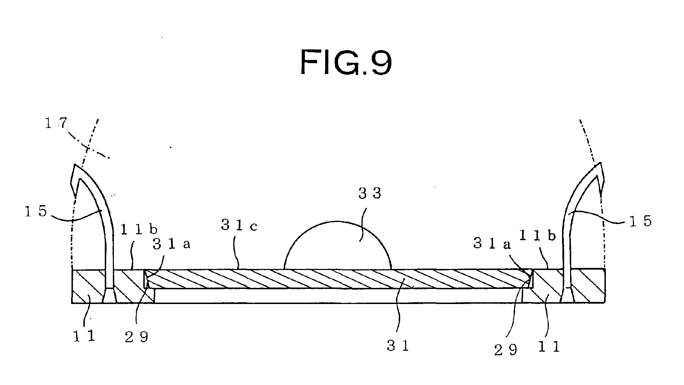

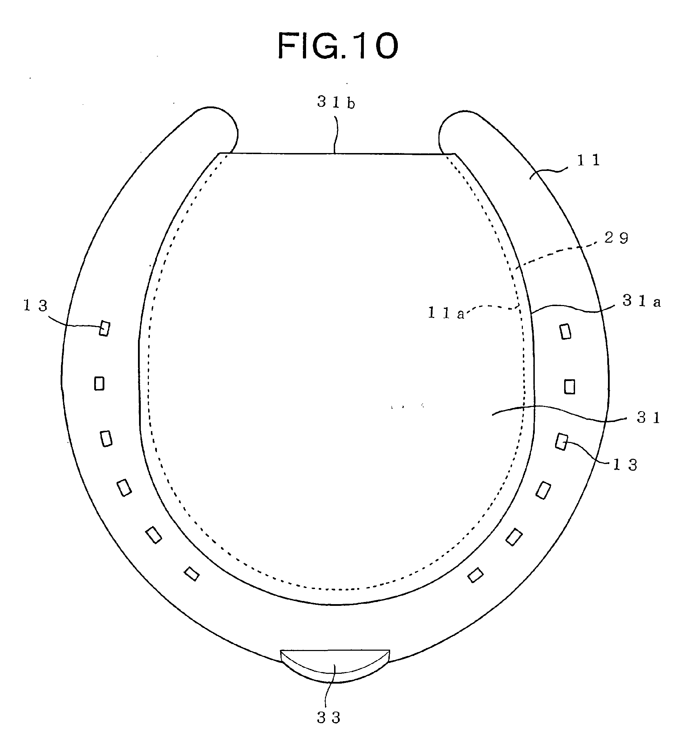

In Figs. 9 and 10, a step 29 is formed continuously on the top surface 11b of the horseshoe 11 along the inner edge 11a of the horseshoe 11. Reference symbol 31 represents a flexible plate. The plate 31 is made, for example, of a synthetic resin such as a urethane resin. The plate 31 has a partially elliptical shape with its rear portion 31b cut off. The plate 31 has an outer edge 31a substantially matching the step 29 of the horseshoe 11.

The plate 31 is supported on the inside of the horseshoe 11 by placing the outer edge 31a of the plate 31 on the step 29 of the horseshoe 11 so that a top surface 31c of the plate 31 has substantially the same height as the top surface 11b of the horseshoe 11. Thereby the plate 31 is made attachable to the horseshoe 11 nailed to the hoof 17 and detachable therefrom.

Reference symbol 33 represents a toe clip protruding upward from the toe of the horseshoe 11.

The present invention has the following advantages:
1. The hoof pad is not interposed between the horseshoe and the sole of the hoof. The hoof pad alone can be easily attached to the horseshoe and detached therefrom while the horseshoe is fixed to the hoof by means of nails. In other words, the hoof pad alone can be attached and detached without removing the horseshoe. Therefore, anyone can easily attach and detach the hoof pad. This does no have to be done by a farrier.
2. Since it is not necessary to drive or remove nails when the hoof pad is attached or detached, the possibility of damage to the hoof walls is minimized.
3. Since the hoof pad is not interposed between the horseshoe and the sole of the hoof, the hoof pad does not bear the weight of the horse. Therefore, the hoof pad lasts longer.
4. Since the hoof pad is easy to attach and detach, the hoof pad can be used when needed and removed when not needed.
5. Since the hoof pad is easy to attach and detach, it is possible to do the following at any time: cleaning the hoof, applying hoof oil to the sole of the hoof and removing foreign substances such as sand and sawdust caught between the hoof pad and the sole of the hoof.
6. Since the plate of the hoof pad is supported on the inside of the horseshoe so that the top surface of the plate has substantially the same height as the top surface of the horseshoe, the hoof pad has no effect on the height of the sole of the hoof from the ground. Therefore, the hoof pad can be attached only to a hoof that needs a hoof pad. For example, if only one of the right and left hooves needs a hoof pad, it is perfectly all right to attach a hoof pad only to said one of the hooves.

As many apparently widely different embodiments of the present invention may be made without departing from the spirit and scope thereof, it is to be understood that the invention is not limited to the specific embodiments thereof except as defined in the appended claims.

## Claims

1. A hoof pad comprising a flexible plate having a partially elliptical shape, said plate having an outer edge substantially matching an inner edge of a horseshoe, said plate being provided on a top surface thereof with a plurality of catches, said catches extending outward from said plate, said plate being supported on the inside of the horseshoe by placing said catches on a top surface of the horseshoe so that the top surface of said plate has substantially the same height as the top surface of the horseshoe, thereby said plate being attachable to the horseshoe nailed to a hoof and detachable therefrom.

2. A hoof pad as claimed in claim 1, wherein notches are formed in the top surface of the horseshoe in the sections corresponding to said catches so as to receive said catches.

3. A hoof pad comprising a flexible plate having a partially elliptical shape, a step being formed continuously on a top surface of a horseshoe along an inner edge of the horseshoe, said plate having an outer edge substantially matching said step, said plate being supported on the inside of the horseshoe by placing the outer edge of said plate on said step of the horseshoe so that a top surface of said plate has substantially the same height as the top surface of the horseshoe, thereby said plate being attachable to the horseshoe nailed to a hoof and detachable therefrom.
